# EUROPEAN PATENT SPECIFICATION

(11) **EP 1 969 054 B1**
(45) Date of publication and mention of the grant of the patent: **14.10.2009**
(21) Application number: 05815294.3
(22) Date of filing: 29.11.2005
(51) Int. Cl.: C08L 23/22, C08L 23/28, C08L 7/00, B60C 1/00, C08K 3/34

(54) **TIRE AND CROSSLINKABLE ELASTOMERIC COMPOSITION**
REIFEN UND VERNETZBARE ELASTOMERE ZUSAMMENSETZUNG
PNEU ET COMPOSITION ELASTOMERIQUE RETICULABLE

(43) Date of publication of application: 17.09.2008
(73) Proprietor: PIRELLI TYRE S.p.A., 20126 Milano (IT)
(72) Inventor: GALIMBERTI, Maurizio, I-20126 Milano (IT); GIANNINI, Luca, I-20126 Milano (IT); MELORO, Gianluca, I-20126 Milano (IT)
(74) Representative: Lasca, Sergio
(86) International application number: PCT/EP2005/012716
(87) International publication number: WO 2007/062669

(56) References cited:
- EP-A- 0 869 145
- EP-A- 0 896 981
- EP-A- 1 179 561
- EP-A- 1 535 961
- US-A- 4 502 520

## Description

The present invention relates to a tire and to a crosslinkable elastomeric composition.

More in particular the present invention relates to a tire comprising at least one layer including a crosslinked elastomeric material having air barrier properties, said crosslinked elastomeric material being obtained by crosslinking a crosslinkable elastomeric composition comprising at least one butyl rubber, at least one reinforcing filler and at least one modified polycarboxylate.

Moreover, the present invention also relates to a crosslinkable elastomeric composition comprising at least one butyl rubber, at least one reinforcing filler and at least one modified polycarboxylate, as well as to a crosslinked manufactured article obtained by crosslinking said crosslinkable elastomeric composition.

The inner surface of tires, in particular of tubeless tires, generally includes a layer of crosslinked elastomeric material which is designed to prevent or retard air and moisture permeation and to maintain tire pressure, so ensuring a hermetic seal of the tire when the tire is installed on a rim and inflated. Said layer is often referred to as "liner" or "innerliner".

Butyl rubbers and/or halogenated butyl rubbers are commonly used for making tire innerliners because they are relatively impermeable to air and moisture and exhibit other desirable physical properties such as, for example, flex fatigue resistance and age durability.

It is also known to use white filler in rubber compositions for tire innerliners.

For example, Japanese Patent Application 2004/204099 relates to a rubber composition comprising 100 pts. mass (in mass part) of a rubber component and 35-200 pts. mass of a white filler. As a rubber component, halogenated butyl rubbers and other diene rubbers such as, for example, natural or synthetic polyisoprene rubber, polybutadiene rubber, are disclosed. As a white fillers, titanium oxide, silica, calcium carbonate, magnesium carbonate, mica, zinc white, clay, are disclosed. The abovementioned rubber composition is said to be suitable for white and light-color innerliners. Adhesivity with other tire structural elements, durability and strength of said innerliners is said to be improved.

Furthermore, it is also known to add layered clays to crosslinkable elastomeric compositions in order to improve air barrier properties.

For example, International Patent Application WO 02/48257 relates to an elastomeric composition including an isobutylene-based copolymer such as, for example, a halogenated poly(isobutylene-co-p-methylstyrene), halogenated star branched butyl rubber, halogenated butyl rubber, or mixture thereof, at least one filler such as, for example, calcium carbonate, silica, carbon black, and a polybutene oil having a number average molecular weight greater than 400. Said elastomeric composition may also include an exfoliated clay which may be selected from natural or synthetic phyllosilicates, particularly smectite clays such as, for example, montmorillonite. The abovementioned elastomeric composition is said to have improved air barrier properties and processing properties and to be particularly useful as an air barrier.

International Patent Application WO 02/100936 relates to a nanocomposite comprising a clay, an interpolymer, one for more exfoliating additives, wherein the exfoliating additive is an amine having the structure R²R³R⁴N, wherein R², R³ and R⁴ are C₁ to C₂₀ alkyls or alkenes which may be identical or different. The interpolymer may be a copolymer of a C₄ to C₇ isomonoolefin derived units, a para-methylstyrene derived units and a para(halomethylstyrene) derived units. The clay may be selected from natural or synthetic phyllosilicates, particularly smectite clays such as, for example, montmorillonite. The abovementioned nanocomposite is said to have improved air barrier properties. A tire innerliner and a tire innertube comprising said nanocomposite are also disclosed.

International Patent Application WO. 2004/005388 relates to a nanocomposite comprising a clay and an elastomer comprising C₂ to C₁₀ olefin derived units, wherein said elastomer also comprises functionalized monomer units pendant to the elastomer. Preferably, the elastomer is selected from poly(isobutylene-co-p-alkylstyrene) elastomers and poly(isobutylene-co-isoprene) elastomers, which are functionalized by reacting free radical generating agents and unsaturated carboxylic acids, unsaturated esters, unsaturated imides, and the like, with the elastomer. The abovementioned nanocomposite is said to have improved air barrier properties and to be particularly useful for tire innerliner and innertubes.

European Patent Application EP 1,408,074 relates to a rubber compound comprising at least one solid, optionally halogenated, butyl elastomer and at least one nanoclay such as natural or synthetic clays, optionally modified with organic modifiers, such as, for example, smectite clays (for example, sodium or calcium montmorillonite): The abovementioned rubber compound is said to have low die swell, less mill shrinkage, faster extrusion times and improved heat aging combined with a lower Mooney scorch. The abovementioned rubber compound is said to be particularly suitable for a number of applications such as, for example, tire treads and tire sidewalls, tire innerliners, tank linings, hoses, rollers, conveyors belts, curing bladders, gas masks, pharmaceutical enclosures and gaskets.

Japanese Patent Application 2003/335902 relates to a rubber composition formed by mixing 100 parts by weight of solid rubber and 1-150 parts by weight of an organically treated layered mineral clay, which further includes 1-50 parts by weight of liquid rubber having an ammonium salt structure produced from liquid rubber containing a maleic anhydride structure, said liquid rubber being used as a compatibilizing agent for said solid rubber and layered mineral clay. The solid rubber may be selected from diene rubber or hydrogenated diene rubber, olefin rubber, halogen containing rubber, silicone rubber, thermoplastic rubber. The organically treated layered clay may be selected from natural or synthetic clays such as smectites (for example, montmorillonite). The abovementioned rubber composition is said to be useful for pneumatic tires innerliners.

The Applicant has faced the problem of obtaining crosslinkable elastomeric, compositions having improved air barrier properties.

The Applicant has now found that it is possible to obtain crosslinkable elastomeric compositions that may be advantageously used in the manufacturing of crosslinked manufactured products, in particular in the manufacturing of tires, more in particular in the manufacturing of tire innerliners, by adding to the crosslinkable elastomeric compositions at least one reinforcing filler and at least one modified polycarboxylate as defined hereinbelow.

Said crosslinkable elastomeric composition show improved air barrier properties. Moreover, said improvements are obtained without negatively affecting mechanical properties (both static and dynamic) of the crosslinked elastomeric compositions. Furthermore, a good processability and extrudability of the same is obtained as shown by their viscosity values.

According to a first aspect, the present invention relates to a tire comprising:
- a carcass structure comprising at least one carcass ply, of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structures;
- a pair of sidewalls applied laterally on opposite sides with respect to said carcass structure;
- at least one layer including a crosslinked elastomeric material having air barrier properties; wherein said crosslinked elastomeric material is obtained by crosslinking a crosslinkable elastomeric composition comprising:
   (a) an amount of from 10 phr to 100 phr, preferably of from 20 phr to 60 phr, of at least one butyl rubber;
   (b) an amount of from 0 phr to 90 phr, preferably of from 40 phr to 80 phr, of at least one diene elastomeric polymer;
   (c) an amount of from 5 phr to 120 phr, preferably of from 15 phr to 90 phr, of at least one reinforcing filler selected;
   (d) an amount of from 2 phr to 20 phr, preferably of from 5 phr to 15 phr, of at least one copolymer of at least one ethylenically unsaturated carboxylic acid or a derivative thereof with at least one ethylenically unsaturated monomer containing at least one polyoxyalkylene side chain.

For the purposes of the present description and of the claims which follow, the term "phr" means the parts by weight of a given component of the elastomeric composition per 100 parts by weight of the rubber.

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

According to one preferred embodiment, said at least one layer including a crosslinked elastomeric material having air barrier properties is applied in a radially inner position with respect to said carcass structure.

According to a further preferred embodiment, said at least one layer including a crosslinked elastomeric material having air barrier properties is a tire innerliner.

According to further embodiment, said at least one layer including a crosslinked elastomeric material having air barrier properties is included in said at least one carcass ply. In this case, said at least one layer including a crosslinked elastomeric material having air barrier properties may be the layer which at least partially coats the plurality of reinforcing cords arranged parallel to each other which are generally included in the carcass ply. Alternatively, in the case in which more carcass plies are present, said at least one layer including a crosslinked elastomeric material having air barrier properties may be placed between two of said carcass plies.

According to a further aspect, the present invention also relates to a crosslinkable elastomeric composition comprising:
(a) an amount of from 10 phr to 100 phr, preferably of from 20 phr to 60 phr, of at least one butyl rubber;
(b) an amount of from 0 phr to 90 phr, preferably of from 40 phr to 80 phr, of at least one diene elastomeric polymer;
(c) an amount of from 5 phr to 120 phr, preferably of from 15 phr to 90 phr of at least one reinforcing filler;
(d) an amount of from 2 phr to 20 phr, preferably of from 5 phr to 15 phr, of at least one copolymer of at least one ethylenically unsaturated carboxylic acid or a derivative thereof with at least one ethylenically unsaturated monomer containing at least one polyoxyalkylene side chain.

According to one .preferred embodiment, said crosslinkable elastomeric composition may further comprise (e) at least one polyoxyalkylene glycol in an amount of from 0 phr to 10 phr, preferably of from 0.5 phr to 5 phr.

According to a further preferred embodiment, said crosslinkable elastomeric composition may further comprise (f) at least one silane coupling agent in an amount of from 0 phr to 10 phr, preferably of from 0.5 phr to 5 phr.

According to a further aspect, the present invention also relates to a crosslinked manufactured article obtained by crosslinking a crosslinkable elastomeric composition above disclosed. Preferably, said crosslinked manufactured article is an inner tube to be fitted into a tire.

According to one preferred embodiment, said butyl rubber (a) may be selected from isobutyl rubbers.

Preferably, said isobutyl rubbers may be selected from homopolymers of isoolefin monomer containing from 4 to 12 carbon atoms or copolymers obtained by polymerizing a mixture comprising at least one isoolefin monomer containing from 4 to 12 carbon atoms and at least one conjugated diolefin monomer containing from 4 to 12 carbon atoms.

Preferably, said copolymers contain from 70% by weight to 99.5% by weight, preferably from 85% by weight to 95.5% by weight, based on the hydrocarbon content of the copolymer, of at least one isoolefin monomer and from 0.5% by weight to 30% by weight, preferably of from 4.5% by weight to 15% by weight, based on the hydrocarbon content of the copolymer, of at least one conjugated diolefin monomer.

Preferably, the isoolefin monomer may be selected from C₄-C₁₂ compounds such as, for example, isobutylene, isobutene, 2-methyl-1-butene, 3-methyl-1-butene, 2-methyl-2-butene, methyl vinyl ether, indene, vinyltrimethylsilane, hexene, 4-methyl-1-pentene, or mixtures thereof. Isobutylene is preferred.

Preferably, the conjugated diolefin monomer may be selected from C₄-C₁₄ compounds such as, for example, isoprene, 1,3-butadiene, 2,3-dimethyl-1,3-butadiene, myrcene, 6,6-dimethyl-fulvene, hexadiene, cyclopentadiene, piperylene, or mixtures thereof. Isoprene is preferred.

Other polymerizable monomers such as, for example, styrene, styrene optionally substituted with C₁-C₄-alkyl groups or halogen atoms, such as, for example, methylstyrene, dichlorostyrene, may also be present in the abovementioned isobutyl rubbers.

According to one preferred embodiment, the isobutyl rubbers may be selected from copolymers containing from 95% by weight to 99.5% by weight based on the hydrocarbon content of the copolymer of isobutylene and from 0.5% by weight to 5% by weight based on the hydrocarbon content of the copolymer of isoprene.

Further details regarding isobutyl rubbers and the methods for their preparation may be found, for example, in United States Patents US 2,356,128, US 3,968,076, US 4,474,924, US 4,068,051, or US 5,532,312.

Examples of commercially available isobutyl rubbers which may be used in the present invention are the products Exxon^{®} butyl grade of poly(isobutylene-co-isoprene), or Vistanex^{®} polyisobutylene rubber, from Exxon.

According to a further preferred embodiment, said butyl rubber (a) may be selected from halogenated butyl rubbers.

Halogenated butyl rubbers are derived from the butyl rubbers above disclosed by reaction with chlorine or bromine according to methods known in the art. For example, the butyl rubber may be halogenated in hexane diluent, working at a temperature of from 40°C to 60°C, using bromine or chlorine as the halogenation agent. Preferably, the halogen contents is from 0.1% by weight to 10% by weight, preferably from 0.5% by weight to 5% by weight, based on the weight of the halogenated butyl rubber.

Halogenated butyl rubbers that are particularly preferred according to the present invention are chlorobutyl rubbers, bromobutyl rubbers, or mixtures thereof.

Further details regarding the halogenated butyl rubbers and the methods for their preparation may be found, for example, in United States Patents US 2,631,984, US 3,099,644, US 4,554,326, US 4681,921, or US 5, 681, 901.

Examples of commercially available chlorobutyl and bromobutyl rubbers which may be used in the present invention are the products Chlorobutyl 1240, or Bromobutyl 2030, from Lanxess.

According to a further preferred embodiment, said butyl rubber (a) may be selected from branched or "star-branched" butyl rubbers (SBB), halogenated "star-branched" butyl rubbers (HSSB), or mixtures thereof.

Preferably, the star branched butyl rubber is a composition of a butyl rubber, either halogenated or not, and a polydiene or block copolymer, either halogenated or not. The polydiene/block copolymer or branching agents (hereinafter referred to as "polydienes"), are typically cationically reactive and are present during the polymerization of the butyl rubber, or may be blended with the butyl rubber to form the star branched butyl rubber.

More particularly, the star branched butyl rubber is typically a composition of the butyl or Halogenated butyl rubber as disclosed above and a copolymer of a polydiene and a partially halogenated polydiene selected from the group comprising styrene, polybutadiene, polyisoprene, polypiperylene, natural rubber, styrene-butadiene rubber, ethylene-propylene diene rubber (EPDM), ethylene-propylene rubber (EPM), styrene-butadiene-styrene or styrene-isoprene-styrene block copolymers, or mixtures thereof. These polydienes are present, based on the monomer wt%, in an amount of from 0.3 wt% to 3 wt%, preferably of from 0.4 wt% to 2.7 wt%.

Further details regarding star branched or halogenated star branched butyl rubbers and methods for their preparation may be found, for example, in European Patent EP 678,529, or in United States Patents US 4,074,035, US 5,071,913, US 5,182,333, US 5,286,804, or US 6,228,978.

Examples of commercially available star branched butyl rubbers which may be used in the present invention are the products Chlorobutyl 1066, or Bromobutyl 2222, from Exxon Mobil.

According to a further preferred embodiment, said butyl rubber (a) may be selected from Halogenated isobutylene/p-alkylstyrene copolymers.

Said halogenated isobutylene/p-alkylstyrene copolymers may be selected from copolymers of an isoolefin containing from 4 to 7 carbon atoms such as, for example, isobutylene, and of a p-alkylstyrene such as, for example, p-methylstyrene. Said copolymers are known in the prior art and are disclosed, for example, in United States Patent US 5,162,445.

Preferred products are those derived from the halogenation of a copolymer between an isoolefin containing from 4 to 7 carbon atoms such as, for example, isobutylene, and a comonomer such as p-alkylstyrene in which at least one of the substituents on the alkyl groups present in the styrene unit is a halogen, preferably chlorine or bromine.

Further details regarding the preparation of halogenated isobutylene/p-alkylstyrene copolymers that are suitable for carrying out the present invention are disclosed, for example in United States Patent US 5,512,638.

Examples of halogenated isobutylene/p-alkylstyrene copolymers which may be used in the present invention and which are currently commercially available include the Exxpro^{®} products from Exxon Mobil.

Mixtures of the above disclosed butyl rubbers may also be advantageously used for the aim of the present invention.

According to one preferred embodiment, said diene elastomeric polymer (b) may be selected from those commonly used in sulfur-crosslinkable elastomeric materials, that are particularly suitable for producing tires, that is to say from elastomeric polymers or copolymers with an unsaturated chain having a glass transition temperature (Tg) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene or isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymers may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

The above disclosed crosslinkable elastomeric composition may optionally comprise (b') at least one elastomeric copolymer of ethylene and at least one α-olefin, optionally with a diene. The α-olefins generally contains from 3 to 12 carbon atoms, such as, for example, propylene, 1-butene, 1-pentene, 1-hexene, 1-octene, or mixtures thereof. The diene optionally present generally contains from 4 to 20 carbon atoms and is preferably selected from: 1,3-butadiene, isoprene, 1,4-hexadiene, -1,4-cyclohexadiene, 5-ethylidene-2-norbornene, 5-methylene-2-norbornene, vinylnorbornene, or mixtures thereof. Among these, the following are particularly preferred: ethylene/propylene copolymer (EPR), ethylene/propylene/diene copolymers (EPDM); or mixtures thereof.

Optionally, the diene elastomeric polymers and/or the elastomeric copolymers above disclosed may be functionalized by reaction with suitable terminating agents or coupling agents. In particular, the diene elastomeric polymers obtained by anionic polymerization in the presence of an organometallic initiator (in particular an organolithium' initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124 or US 4,550,142).

Optionally, the diene elastomeric polymer and/or the elastomeric copolymers above disclosed may include at least one functional group selected from carboxylic groups, carboxylate groups, anhydride groups, ester groups, epoxy groups, or mixtures thereof.

According to one preferred embodiment, said reinforcing filler (c) may be selected from: calcium carbonate, magnesium carbonate, titanium oxide, silica, mica, zinc white, clay, alumina, aluminosilicates, kaolin, carbon black, or mixtures thereof. Calcium carbonate, carbon black, or mixtures thereof are particularly preferred.

When silica is used as a reinforcing filler (c), said silica may generally be a pyrogenic silica or, preferably, a precipitated silica, with.a BET surface area (measured according to ISO standard 5794/1) of from 50 m²/g to 500 m²/g, preferably of from 70 m²/g to 200 m²/g.

Moreover, when silica is used as a reinforcing filler, the crosslinkable elastomeric composition above disclosed may advantageously incorporate at least one silane coupling agent (g) capable of interacting with silica and of linking it to the elastomeric polymers during the vulcanization. Examples of silane coupling agents which may be used will be disclosed below.

When carbon black is used as a reinforcing filler (c), said carbon black reinforcing filler may be selected from those having a surface area of not less than 20 m²/g (determined by CTAB absorption as described in Standard ISO 6810:1995).

According to a further preferred embodiment, said reinforcing filler (c) may be selected from layered materials having an individual layer thickness of from 0.01 nm to 30 nm, preferably of from 0.05 nm to 15 nm, more preferably of from 0.1 nm to 2 nm.

According to one preferred embodiment, said layered material may be selected, for example, from: phyllosilicates such as: smectites, for example, montmorillonite, bentonite, nontronite, beidellite, volkonskoite, hectorite, saponite, sauconite; vermiculite; halloisite; sericite; aluminate oxides; hydrotalcite; or mixtures thereof. Montmorillonite, bentonite, or mixtures thereof, are particularly preferred. These layered materials generally contain exchangeable ions such as sodium (Na⁺), calcium (Ca²⁺), potassium (K⁺), magnesium (Mg²⁺) , hydroxide (HO⁻) , or carbonate (CO₃²⁻) present at the interlayer surfaces.

In order to render the layered materials more compatible with the rubber, said layered materials may be optionally treated with at least one compatibilizing agent. Said compatibilizing agent is capable of undergoing ion exchange reactions with the ions present at the interlayers surfaces of the layered materials.

Said compatibilizing agent may be selected, for example, from the quaternary ammonium or phosphonium salts having general formula (I): 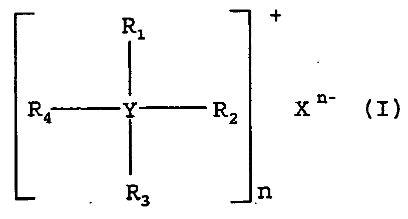 wherein:
- Y represents N or P;
- R₁ R₂ , R₃ and R₄, which may be equal or different from each other, represent a linear or branched C₁-C₂₀ alkyl or hydroxyalkyl group; a linear or branched C₁-C₂₀ alkenyl or hydroxyalkenyl group; a group -R₅-SH or -R₅-NH wherein R₅ represents a linear or branched C₁-C₂₀ alkylene group; a C₆-C₁₈ aryl group; a C₇-C₂₀ arylalkyl or alkylaryl group; a C₅-C₁₈ cycloalkyl group, said cycloalkyl group possibly containing hetero atom such as oxygen, nitrogen or sulfur;
- Xⁿ⁻ represents an anion such as the chloride ion, the sulfate ion or the phosphate ion;
- n represents 1, 2 or 3.

The treatment of the layered materials with the compatibilizing agent may be carried out according to known methods such as, for example, by an ion exchange reaction between the layered material and the compatibilizing agent: further details are described, for example, in United States Patents US 4,136,103, US 5,747,560, or US 5,952,093.

According to one preferred embodiment, the layered materials are untreated, i.e. they are not treated with a compatibilizing agent.

Example of layered materials which may be used according to the present invention and are available commercially are the products known by the name of Cloisite^{®} Na⁺ from Southern Clays, or Bentonite^{®} AG/3 from Dal Cin S.p.A.

According to one preferred embodiment, said copolymer of at least one ethylenically unsaturated carboxylic acid or a derivative thereof with at least one ethylenically unsaturated monomer containing at least one polyoxyalkylene side chain (d) may be selected from compounds having the following general formula (II): 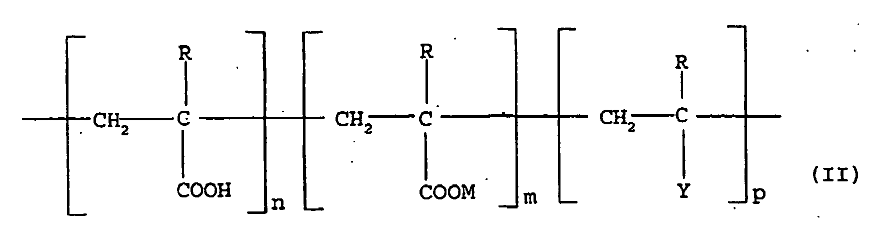 wherein:
- R represents a hydrogen atom or a linear or branched C₁-C₄ alkyl group, preferably a methyl group;
- M represents a monovalent or a divalent cation, preferably:
   - an alkali metal cation, more preferably sodium or potassium;
   - an alkaline-earth metal cation, more preferably calcium;
   - an ammonium cation having formula N (R₆)₄ wherein R₆ groups, which may be equal or different from each other, are selected from: hydrogen atoms, linear or branched C₁-C₁₈ alkyl groups, C₆-C₁₈ aryl groups, C₇-C₂₁ arylalkyl or alkylaryl groups, more preferably NH₄;
   - a zinc cation;
- n is an integer of from 0 to 20, preferably of from 1 to 10, extremes included;
- m and p, which may be equal or different from each other, are an integer of from 1 to 20, preferably of from 2 to 10, extremes included;
- Y represents one of the groups having the following general formulae (III), (IV), or (v) : 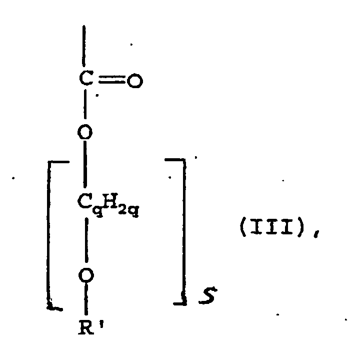 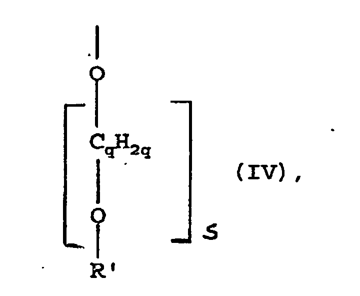 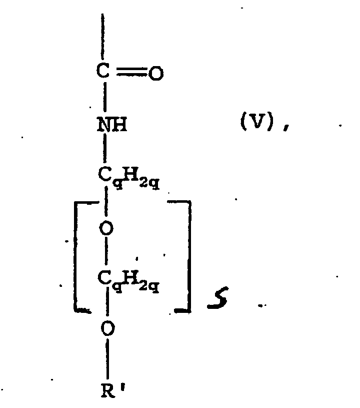
wherein:
- R has the same meanings as above disclosed;
- R' represents a hydrogen atom; a linear or branched C₁-C₁₀ alkyl group, preferably a methyl group; a R"-SO₃M group, wherein R" represents a linear or branched C₂-C₁₀ alkylene group, preferably a methylene group, and M has the same meanings as above disclosed;
- q is an integer of from 1 to 10, preferably of from 1 to 5, extremes included;
- s is an integer of from 1 to 100, preferably of from 4 to 50, extremes included.

According to one preferred embodiment, said copolymer of at least one ethylenically unsaturated carboxylic acid or a derivative thereof with at least one ethylenically unsaturated monomer containing at least one polyoxyalkylene side chain (d) has a weight-average molecular weight (M_{w}) of from 500 to 100, 000, preferably of from 1,000 to 50, 000, more preferably of from 2,000 to 30,000. Said weight average molecular weight (M_{w}) may be determined according to known techniques such as, for example, by gel permeation chromatography (GPC).

The copolymer of at least one ethylenically unsaturated carboxylic acid or a derivative thereof with at least one ethylenically unsaturated monomer containing at least one polyoxyalkylene side chain (d) above disclosed may be obtained by processes known in the art. For example, said copolymer may be obtained by the free-radical polymerization of about 1 wt% to 99 wt% of at least one unsaturated monocarboxylic or dicarboxylic acid or a derivative thereof (such as, for example, (meth)acrylic acid, maleic acid, maleic anhydride), with about 99 wt% to 1 wt% of at least one compound having the following general formula (VI): 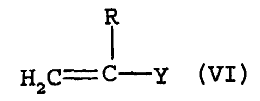 wherein R and Y have the same meanings as above disclosed.

The copolymers so obtained may be further reacted with alkali metal hydroxides, alkaline-earth metal hydroxides, zinc hydroxide, or ammonium compounds.

Said copolymers may be terminated with hydrogen atoms or residues of the polymerization iniziators usually used such as, for example, peroxides, persulfates, azo-type iniziators.

Further details about the processes for producing said copolymers may be found, for example, in International Patent Application WO 03/106369, in United States Patents US 5,798,425, or US 5,632,324, or in United States Patent Application US 2003/0144384.

Examples of copolymers of at least one ethylenically unsaturated carboxylic acid or a derivative thereof with at least one ethylenically unsaturated monomer containing at least one polyoxyalkylene side chain (d) which may be used in the present invention and which are currently commercially available are the products Melflux^{®} from Degussa Construction Polymers (in particular, Melflux^{®} PP100, Melflux^{®} VP2651, Melflux^{®} 1641), Narlex^{®} from Alco Chemical (in particular Narlex^{®} D36, Narlex^{®} D38), Peramin^{®} Conpac S149 from Perstorp.

As disclosed above, said crosslinkable elastomeric composition may further comprise (e) at least one polyoxyalkylene glycol. Preferably, said polyoxyalkylene glycol may be selected, for example, from polyoxyethylene glycol, polyoxypropylene glycol, or mixtures thereof. Polyoxyethylene glycol is particularly preferred.

As disclosed above, said crosslinkable elastomeric composition may further comprise (f) at least one silane coupling agent.

According to one preferred embodiment, said silane coupling agent (f) may be selected from those having at least one hydrolizable silane group which may be identified, for example, by the following general formula (VII) :

(R₇) ₃Si-CₙH₂ₙ-X (VII)

wherein the groups R₇, which may be equal or different from each other, are selected from: alkyl, alkoxy or aryloxy groups, or from halogen atoms, on condition that at least one of the groups R₇ is an alkoxy or aryloxy group; n is an integer of from 1 to 6, extremes included; X is a group selected from: nitroso, mercapto, amino, epoxy, vinyl, imido, chloro, (S)ₘCₙH₂ₙ-Si-(R₇)₃, or -S-COR₇, in which m and n are integers of from 1 to 6, extremes included, and the groups R₇ are defined as above.

Among the silane coupling agents that are particularly preferred are bis(3-triethoxysilylpropyl)tetrasulphide, or bis(3-triethoxysilylpropyl)-disulphide. Said coupling agents may be used as such or as a suitable mixture with an inert filler (for example carbon black) so as to facilitate their incorporation into the rubber used.

The crosslinkable elastomeric composition above disclosed may be vulcanized according to known techniques, in particular with sulfur-based vulcanizing systems commonly used for elastomeric polymers. To this end, in the crosslinkable elastomeric composition, after one or more steps of thermal-mechanical processing, a sulfur-based vulcanizing agent is incorporated together with vulcanization accelerators. In the final processing step, the temperature is generally kept below 120°C and preferably below 100°C, so as to avoid any unwanted pre-crosslinking phenomena.

The vulcanizing agent most advantageously used is sulfur, or molecules containing sulfur (sulfur donors), with accelerators and activators known to those skilled in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb3O4, PbO2, or mixtures thereof.

Accelerators that are commonly used may be selected from: dithiocarbamates, guanidine, thiourea, thiazoles, sulfenamides, thiurams, amines, xanthates, or mixtures thereof.

Said crosslinkable elastomeric composition may comprise other commonly used additives selected on the basis of the specific application for which the composition is intended. For example, the following may be added to said crosslinkable elastomeric composition: antioxidants, anti-ageing agents, plasticizers, adhesives, anti-ozone agents, modifying resins, fibers (for example Kevlar^{®} pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said crosslinkable elastomeric composition. The amount of plasticizer generally ranges from 0 phr to 70 phr, preferably from 5 phr to 30 phr.

The above disclosed crosslinkable elastomeric composition may be prepared by mixing together the rubber components (i.e., the butyl rubber (a), the diene elastomeric polymer (b) and/or the other elastomeric polymer (b') optionally present), the reinforcing filler (c) and the copolymer (d), with the other additives optionally present, according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twinscrew type.

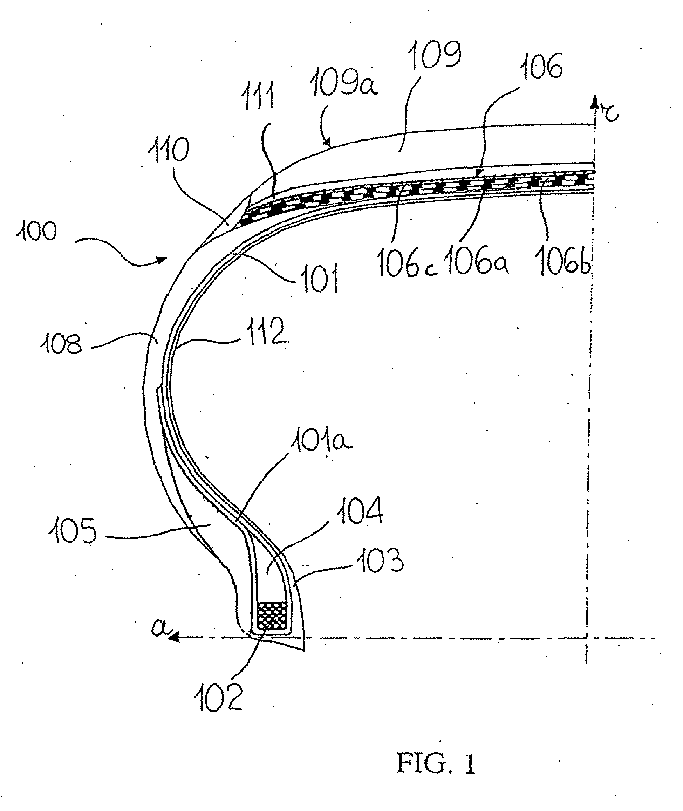

The present invention will now be illustrated in further detail by means of the attached Fig. 1 which is a view in cross section of a portion of a tire made according to the present invention.

"a" indicates an axial direction and "r" indicates a radial direction. For simplicity, Fig. 1 shows only a portion of the tire, the remaining portion not represented being identical and symmetrically arranged with respect to the radial direction "r".

The tire (100) comprises at least one carcass ply (101), the opposite lateral edges of which are associated with respective bead structures comprising at least one bead core (102) and at least one bead filler (104). The association between the carcass ply (101) and the bead core (102) is achieved here by folding back the opposite lateral edges of the carcass ply (101) around the bead core (102) so as to form the so-called carcass back-fold (101a) as shown in Fig. 1.

Alternatively, the conventional bead core (102) can be replaced with at least one annular insert formed from rubberized wires arranged in concentric coils (not represented in Fig. 1) (see, for example, European Patent Applications EP 928,680, or EP 928,702). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer including a crosslinked elastomeric material having air barrier properties which may be made according to the present invention. These reinforcing cords are usually made of textile fibers, for example rayon, nylon or polyethylene terephthalate, or of steel wires stranded together, coated with a metal alloy (for example copper/zinc alloy, zinc/manganese alloy, zinc/molybdenum/cobalt alloy, and the like). Alternatively, in the case in which more carcass plies are present, said layer including a crosslinked elastomeric material having air barrier properties which may be made according to the present invention may be placed between two of said carcass plies (not represented in Fig. 1).

The carcass ply (101) is usually of radial type, i.e. it incorporates reinforcing cords arranged in a substantially perpendicular direction relative to a circumferential direction. The core (102) is enclosed in a bead (103), defined along an inner circumferential edge of the tire (100), with which the tire engages on a rim (not represented in Fig. 1) forming part of a vehicle wheel. The space defined by each carcass back-fold (101a) contains a bead filler (104) which may be made according to the present invention, wherein the bead core (102) is embedded. An antiabrasive strip (105) is usually placed in an axially external position relative to the carcass back-fold (101a).

A belt structure (106), is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt", which generally incorporates a plurality of reinforcing cords, typically textile cords, arranged at an angle of a few degrees relative to a circumferential direction, and coated and welded together by means of an elastomeric material.

A side wall (108) is also applied externally onto the carcass ply (101), this side wall extending, in an axially external position, from the bead (103) to the end of the belt structure (106).

A tread band (109), whose lateral edges are connected to the side walls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A tread underlayer (111), is placed between the belt structure (106) and the tread band (109).

As represented in Fig. 1, the tread underlayer (111) may have uniform thickness.

Alternatively, the tread underlayer (111) may have a variable thickness in the transversal direction. For example, the thickness may be greater near its outer edges than at a central zone.

In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip made of elastomeric material (110), commonly known as a "mini-side wall", may optionally be present in the correcting zone between the side walls (108) and the tread band (109), this mini-side wall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tires, an innerliner (112), which may be made according to the present invention, which provides the necessary impermeability to the inflation air of the tire, may be provided in an inner position relative to the carcass ply (101).

In the case of a tire provided with an inner tube (not represented in Fig. 1), said inner tube may be made according to the present invention.

The process for producing the tire according to the present invention may be carried out according to techniques and using apparatus that are known in the art, as described, for example, in European Patent EP 199,064, or in United States Patents US 4,872,822, or US 4,768,937, said process including at least one stage of manufacturing the crude tire and at least one stage of vulcanizing this tire.

More particularly, the process for producing the tire comprises the steps of preparing, beforehand and separately from each other, a series of demi-finished products corresponding to the various structural elements of the tire (for example, carcass plies, belt structure, bead wires, fillers, sidewalls, innerliner and tread band) which are then combined together using a suitable manufacturing machine. Next, the subsequent vulcanization step welds the abovementioned semi-finished products together to give a monolithic block, i.e., the finished tire.

The step of preparing the abovementioned semi-finished products will be preceded by a step of preparing and molding the various crosslinkable elastomeric compositions, of which said semi-finished products are made, according to conventional techniques.

The crude tire thus obtained is then passed to the subsequent steps of molding and vulcanization. To this end, a vulcanization mould is used which is designed to receive the tire being processed inside a molding cavity having walls which are countermolded to define the outer surface of the tire when the vulcanization is complete.

Alternative processes for producing a tire or parts of a tire without using semi-finished products are disclosed, for example, in the abovementioned European Patent Applications EP 928,680, or EP 928,702.

According to one preferred embodiment, said layer including a crosslinked elastomeric material (for example, said innerliner) is formed by a plurality of coils of a continuous elongated element. Said elongated element may be produced, for example, by extruding the crosslinkable elastomeric composition above disclosed. Preferably, said layer is assembled onto a support.

For the purposes of the present description and of the claims which follow, the term "support" is used to indicate the following devices:
- an auxiliary drum having a cylindrical shape, said auxiliary drum preferably supporting a belt structure;
- a shaping drum having a substantially toroidal configuration, said shaping drum preferably supporting at least one carcass structure with a belt structure assembled thereon;
- a rigid support preferably shaped according to the inner configuration of the tire.

Further details regarding said devices and the methods of forming and/or depositing the above mentioned layer on a support are described, for example, in International Patent Application WO 01/36185, or in European Patent EP 976,536, both in the name of the Applicant, or in European Patent Applications: EP 968,814, EP 1,201,414, or EP 1,211,057.

The crude tire may be molded by introducing a pressurized fluid into the space defined by the inner surface of the tire, so as to press the outer surface of the crude tire against the walls of the molding cavity. In one of the molding methods widely practiced, a vulcanization chamber made of elastomeric material, filled with steam and/or another fluid under pressure, is inflated inside the tire closed inside the molding cavity. In this way, the crude tire is pushed against the inner walls of the molding cavity, thus obtaining the desired molding. Alternatively, the molding may be carried out without an inflatable vulcanization chamber, by providing inside the tire a toroidal metal support shaped according to the configuration of the inner surface of the tire to be obtained as described, for example, in European Patent EP 1,189,744.

At this point, the step of vulcanizing the crude tire is carried out. To this end, the outer wall of the vulcanization mould is placed in contact with a heating fluid (generally steam) such that the outer wall reaches a maximum temperature generally of from 100°C to 230°C. Simultaneously, the inner surface of the tire is heated to the vulcanization temperature using the same pressurized fluid used to press the tire against the walls of the molding cavity, heated to a maximum temperature of from 100°C to 250°C. The time required to obtain a satisfactory degree of vulcanization throughout the mass of the elastomeric material may vary in general from 3 min to 90 min and depends mainly on the dimensions of the tire. When the vulcanization is complete, the tire is removed from the vulcanization mould.

The present invention will be further illustrated below by means of a number of preparation examples, which are given for purely indicative purposes and without any limitation of this invention.

### EXAMPLES 1-3

### Preparation of the elastomeric compositions

The elastomeric compositions given in Table 1 were prepared as follows (the amounts of the various components are given in phr).

All the components, except zinc oxide, antioxidant (6-PPD), sulfur, accelerator (MBTS 80), and retardant (PVI), were mixed together in an internal mixer (model Pomini PL 1.6) for about 4 min (1st Step). As soon as the temperature reached 120±5°C, the elastomeric material was discharged. The zinc oxide, antioxidant (6-PPD), sulfur, accelerator (MBTS 80), and retardant (PVI), were then added and mixing was carried out in an open roll mixer (2nd Step).

**TABLE 1**

| EXAMPLES | 1 (*) | 2 | 3 |
|---|---|---|---|
| 1^{st} STEP | | | |
| NR | 70 | 70 | 70 |
| CIIR | 30 | 30 | 30 |
| N660 | 33 | 33 | 33 |
| CaCO₃ | 31 | 31 | 31 |
| Melflux^{®} PP100 | - | 10 | 10 |
| X50S^{®} | - | - | 1.0 |
| Stearic acid | 2.0 | 2.0 | 2.0 |

| 2^{nd} STEP | | | |
|---|---|---|---|
| Zinc oxide | 3.5 | 3.5 | 3.5 |
| 6-PPD | 0.5 | 0.5 | 0.5 |
| Sulfur | 2.2 | 2.2 | 2.2 |
| MBTS 80 | 1.0 | 1.0 | 1.0 |
| PVI | 0.3 | 0.3 | 0.3 |

| | | | |
|---|---|---|---|
| (*): comparative. NR: natural rubber; CIIR: chlorinated isobutylene/isoprene copolymer with a halogen content of 1.2% by weight (Chlorobutyl 1240 from Lanxess); N660: carbon black; CaCO₃: calcium carbonate (Calcitec^{®} V40 from Mineraria Sacilese S.p.A.); Melflux^{®} PP100: copolymer of partially salified (meth)acrylic acid monomers with ethylenically unsaturated monomers containing polyoxyethylene side chains (Degussa Construction Polymers); X50S^{®}: silane coupling agent comprising 50% by weight of carbon black and 50% by weight of bis(3-triethoxysilylpropyl)tetrasulphide (Degussa - the disclosed amount relates to the silane amount); 6-PPD (antioxidant): N-(1,3-dimethylbutyl)-N'-phenyl-p-phenylenediamine; MBTS 80 (accelerator): dibenzothiazyldisulfide (Vulkacit^{®} DM/C - Lanxess); PVI (retardant): N-cyclohexylthiophthalimide (Santogard^{®} PVI - Flexys). | | | |

The Mooney viscosity ML(1+4) at 100°C was measured, according to Standard ISO 289-1:1994, on the non-crosslinked elastomeric compositions obtained as disclosed above. The results obtained are given in Table 2.

The static mechanical properties according to Standard ISO. 37:1994 as well as hardness in IRHD degrees at 23°C according to ISO standard 48:1994, were measured on samples of the abovementioned elastomeric compositions vulcanized at 170°C for 10 min. The results obtained are given.in Table 2.

Table 2 also shows the dynamic mechanical properties, measured using an Instron dynamic device in the traction-compression mode according to the following methods. A test piece of the crosslinked elastomeric composition obtained as disclosed above (vulcanized at 170°C for 10 min) having a cylindrical form (length = 25 mm; diameter = 14 mm) , compression-preloaded up to a 25% longitudinal deformation with respect to the initial length, and kept at the prefixed temperature (23°C or 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

The permeability was measured, at 23°C, according to ISO standard 2782:1995, on samples of the crosslinked elastomeric composition obtained as disclosed above (vulcanized at 170°C for 10 min). To this purpose, test pieces having a diameter of 120 mm and a nominal thickness of 1 mm, were conditioned at 23°C for 16 hours and then subjected to the permeability test: the results obtained are given in Table 2. In Table 2, the numbers relative to the air permeability are shown by taking the value of comparative Example 1 as 100: the lower the number, the better the air permeation resistance.

**TABLE 2**

| EXAMPLE | 1 (*) | 2 | 3 |
|---|---|---|---|
| Mooney Viscosity ML (1+4) | 44.3 | 42.7 | 41.2 |

| STATIC MECHANICAL PROPERTIES | | | |
|---|---|---|---|
| 100% Modulus (MPa) | 1.34 | 1.18 | 1.26 |
| 300% Modulus (MPa) | 5.34 | 4.63 | 5.02 |
| Stress at break (MPa) | 9.13 | 7.43 | 7.86 |
| Elongation at break (%) | 479.7 | 451.3 | 446.2 |

| DYNAMIC MECHANICAL PROPERTIES | | | |
|---|---|---|---|
| E' (23°C) | 4.65 | 5.17 | 5.17 |
| E' (70°C) | 3.60 | 3.82 | 3.88 |
| Tan delta (23°C) | 0.22 | 0.23 | 0.22 |
| Tan delta (70°C) | 0.10 | 0.11 | 0.10 |
| IRHD Hardness (23°C) | 54.2 | 55.5 | 56.5 |
| Permeability (23°C) | 100 | 76.8 | 79.5 |

| | | | |
|---|---|---|---|
| (*): comparative. | | | |

### EXAMPLES 4-6

### Preparation of the elastomeric compositions

The elastomeric compositions given in Table 3 were prepared as follows (the amounts of the various components are given in phr).

All the components, except zinc oxide, antioxidant (6-PPD) , sulfur, accelerator (MBTS 80), and retardant (PVI), were mixed together in an internal mixer (model Pomini PL 1.6) for about 4 min (1st Step). As soon as the temperature reached 120±5°C, the elastomeric material was discharged. The zinc oxide, antioxidant (6-PPD) , sulfur, accelerator (MBTS 80), and retardant (PVI), were then added and mixing was carried out in an open roll mixer (2nd Step).

**TABLE 3**

| EXAMPLE | 4 (*) | 5 | 6 |
|---|---|---|---|
| 1^{st} STEP | | | |
| NR | 70 | 70 | 70 |
| CIIR | 30 | 30 | 30 |
| N660 | 33 | 33 | 33 |
| Bentonite^{®} AG/3 | 31. | 31 | 31 |
| Melflux^{®} PP100 | - | 10 | 10 |
| X50S^{®} | - | - | 1.0 |
| Stearic acid | 2.0 | 2.0 | 2.0 |

| 2^{nd} STEP | | | |
|---|---|---|---|
| Zinc oxide | 3.5 | 3.5 | 3.5 |
| 6-PPD | 0.5 | 0.5 | 0.5 |
| Sulfur | 2.2 | 2.2 | 2.2 |
| MBTS 80 | 1.0 | 1.0 | 1.0 |
| PVI | 0.3 | 0.3 | 0.3 |

| | | | |
|---|---|---|---|
| (*): comparative. NR: natural rubber; CIIR: chlorinated isobutylene/isoprene copolymer with a halogen content of 1.2% by weight (Chlorobutyl 1240 from Lanxess) ; N660: carbon black; Bentonite^{®} AG/3:untreated bentonite having high sodium content (1-1.5%) (Dal Cin S.p.A. ) ; Melflux^{®} PP100: copolymer of partially salified (meth)acrylic acid monomers with ethylenically unsaturated monomers containing polyoxyethylene side chains (Degussa Construction Polymers); X50S^{®}: silane coupling agent comprising 50% by weight of carbon black and 50% by weight of bis(3-triethoxysilylpropyl)tetrasulphide (Degussa - the disclosed amount relates to the silane amount); 6-PPD (antioxidant): N-(1,3-dimethylbutyl)-N'-phenyl-p-phenylenediamine; MBTS 80 (accelerator): dibenzothiazyldisulfide (Vulkacit^{®} DM/C - Lanxess); PVI (retardant): N-cyclohexylthiophthalimide (Santogard^{®} PVI - Flexys). | | | |

The Mooney viscosity ML(1+4) at 100°C was measured, according to Standard ISO 289-1:1994, on the non-crosslinked elastomeric compositions obtained as disclosed above. The results obtained are given in Table 4.

The static mechanical properties according to Standard ISO 37:1994 as well as hardness in IRHD degrees at 23°C according to ISO standard 48:1994, were measured on samples of the abovementioned elastomeric compositions vulcanized at 170°C for 10 min. The results obtained are given in Table 4.

Table 4 also shows the dynamic mechanical properties, measured using an Instron dynamic device in the traction-compression mode according to the following methods. A test piece of the crosslinked elastomeric composition obtained as disclosed above (vulcanized at 170°C for 10 min) having a cylindrical form (length = 25 mm; diameter = 14 mm), compression-preloaded up to a 25% longitudinal deformation with respect to the initial length, and kept at the prefixed temperature (23°C or 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculate as a ratio between viscous modulus (E") and elastic modulus (E').

The permeability was measured, at 23°C, according to ISO standard 2782:1995, on samples of the crosslinked elastomeric composition obtained as disclosed above (vulcanized at 170°C for 10 min). To this purpose, test pieces having a diameter of 120 mm and a nominal thickness of 1 mm, were conditioned at 23°C for 16 hours and then subjected to the permeability test: the results obtained are given in Table 4. In Table 4, the numbers relative to the air permeability are shown by taking the value of comparative Example 1 as 100: the lower the number, the better the air permeation resistance.

**TABLE 4**

| EXAMPLE | 1 (*) | 2 | 3 |
|---|---|---|---|
| Mooney Viscosity ML(1+4) | 51.4 | 47.7 | 48.6 |

| STATIC MECHANICAL PROPERTIES | | | |
|---|---|---|---|
| 100% Modulus (MPa) | 1.49 | 1.67 | 2.11 |
| 300% Modulus (MPa) | 5.45 | 5.27 | 6.53 |
| Stress at break (MPa) | 9.40 | 8.68 | 8.27 |
| Elongation at break (%) | 479.7 | 451.3 | 446.2 |

| DYNAMIC MECHANICAL PROPERTIES | | | |
|---|---|---|---|
| E' (23°C) | 5.20 | 6.17 | 6.55 |
| E' (70°C) | 3.84 | 4.51 | 4.86 |
| Tan delta (23°C) | 0.24 | 0.24 | 0.23 |
| Tan delta (70°C) | 0.13 | 0.13 | 0.11 |
| IRHD Hardness (23°C) | 54.3 | 57.8 | 59.9 |
| Permeability (23°C) | 100 | 77.3 | 84.0 |

| | | | |
|---|---|---|---|
| (*): comparative. | | | |

## Claims

1. Tire comprising:
- a carcass structure comprising at least one carcass ply, of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied literally on opposite sides with respect to said carcass structure;
- at least one layer including a crosslinked elastomeric material having air barrier properties;
wherein said crosslinked elastomeric material is obtained by crosslinking a crosslinkable elastomeric composition comprising:
(a) an amount of from 10 phr to 100 phr of at least one butyl rubber;
(b) an amount of from 0 phr to 90 phr of at least one diene elastomeric polymer;
(c) an amount of from 5 phr to 120 phr of at least one reinforcing filler;
(d) an amount of from 2 phr to 20 phr of at least one copolymer of at least one ethylenically unsaturated carboxylic acid or a derivative thereof with at least one ethylenically unsaturated monomer containing at least one polyoxyalkylene side chain.

2. Tire according to claim 1, wherein said crosslinkable elastomeric composition comprises an amount of from 20 phr to 60 phr of at least one butyl rubber (a).

3. Tire according to claim 1 or 2, wherein said crosslinkable elastomeric composition comprises an amount of from 40 phr to 80 phr of at least one diene elastomeric polymer (b).

4. Tire according to any one of the preceding claims, wherein said crosslinkable elastomeric composition comprises an amount of from 15 phr to 90 phr of at least one reinforcing filler (c).

5. Tire according to any one of the preceding claims, wherein said crosslinkable elastomeric composition comprises an amount of from 5 phr to 15 phr of at least one copolymer of at least one ethylenically unsaturated carboxylic acid or a derivative thereof with at least one ethylenically unsaturated monomer containing at least one polyoxyalkylene side chain (d).

6. Tire according to any one of the preceding claims, wherein said at least one layer including a crosslinked elastomeric material having air barrier properties is applied in a radially inner position with respect to said carcass structure.

7. Tire according to any one of the preceding claims, wherein said at least one layer including a crosslinked elastomeric material having air barrier properties is a tire innerliner.

8. Tire according to any one of claims 1 to 5, wherein said at least one layer including a crosslinked elastomeric material having air barrier properties is included in said at least one carcass ply.

9. Tire according to any one of the preceding claims, wherein said butyl rubber (a) is selected from a group comprising:
- isobutyl rubbers;
- halogenated butyl rubbers;
- a branched or "star-branched" butyl rubbers (SBB), halogenated "star-branched" butyl rubber (HSSB), or mixtures thereof;
- halogenated isobutylene/p-alkylstyrene copolymers.

10. Tire according to claim 9, wherein said isobutyl rubbers are selected from homopolymers of isoolefin monomer containing from 4 to 12 carbon atoms or copolymers obtained by polymerizing a mixture comprising at least one isoolefin monomer containing from 4 to 12 carbon atoms and at least one conjugated diolefin monomer containing from 4 to 12 carbon atoms.

11. Tire according to claim 9, wherein said halogenated butyl rubbers are chlorobutyl rubber, bromobutyl rubber, or mixtures thereof.

12. Tire according to any one of the preceding claims, wherein said diene elastomeric polymer (b) has a glass transition temperature below 20°C.

13. Tire according to claim 12, wherein said diene elastomeric polymer (b) is selected from: cis-1,4-polyisoprene, 3,4-polyisoprene, polybutadiene, optionally halogenated isoprene/isobutene copolymers, 1,3-butadiene/acrylonitrile copolymers, stirene/1,3-butadiene copolymers, stirene/isoprene/1,3-butadiene copolymers, stirene/1,3-butadiene/acrylonitrile copolymers, or mixtures thereof.

14. Tire according to any one of the preceding claims, wherein said crosslinkable elastomeric composition further comprises (b') at least one elastomeric copolymer of ethylene and at least one a-olefin, optionally with a diene.

15. Tire according to claim 14, wherein said elastomeric copolymer (b') is selected from: ethylene/propylene copolymers (EPR) or ethylene/propylene/diene copolymers (EPDM); or mixtures thereof.

16. Tire according to any one of the preceding claims, wherein said reinforcing filler (c) is selected from: calcium carbonate, magnesium carbonate, titanium oxide, silica, mica, zinc white, clay, alumina, aluminosilicates, kaolin, carbon black, or mixtures thereof.

17. Tire according to claim 16, wherein said reinforcing filler (c) is selected from: calcium carbonate, carbon black, or mixtures thereof.

18. Tire according to any one of the preceding claims, wherein said reinforcing filler (c) is selected from layered materials having an individual layer thickness of from 0.01 nm to 30 nm.

19. Tire according to claim 18, wherein said layered materials have an individual layer thickness of from 0.05 nm to 15 nm.

20. Tire according to claim 19, wherein said layered materials have an individual layer thickness of from 0.1 nm to 2 nm.

21. Tire according to any one of claims 18 to 20, wherein said layered materials are selected from: phyllosilicates such as: smectites, such as montmorillonite, bentonite, nontronite, beidellite, volkonskoite, hectorite, saponite, sauconite; vermiculite; halloisite; sericite; aluminate oxides; hydrotalcite; or mixtures thereof.

22. Tire according to claim 21, wherein said layered materials are selected from: montmorillonite, bentonite, or mixtures thereof.

23. Tire according to any one of claims 18 to 22, wherein said layered materials are treated with at least one compatibilizing agent.

24. Tire according to claim 23, wherein said compatibilizing agent is selected from the quaternary ammonium or phosphonium salts having general formula (I): 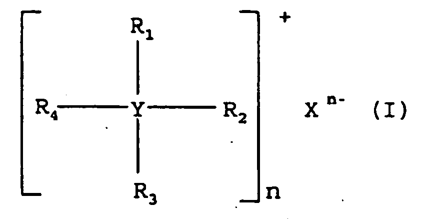 wherein:
- Y represents N or P;
- R₁, ' R₂, R₃ and R₄, which may be equal or different from each other, represent a linear or branched C₁-C₂₀ alkyl or hydroxyalkyl group; a linear or branched C₁-C₂₀ alkenyl or hydroxyalkenyl group; a group -R₅-SH or -R₅-NH
wherein R₅ represents a linear or branched C₁-C₂₀ alkylene group; a C₆-C₁₈ aryl group; a C₇-C₂₀ arylalkyl or alkylaryl group; a C₅-C₁₈ cycloalkyl group, said cycloalkyl group possibly containing hetero atom such as oxygen, nitrogen or sulfur;
- Xⁿ⁻ represents an anion such as the chloride ion, the sulfate ion or the phosphate ion;
- n represents 1, 2 or 3.

25. Tire according to any one of the preceding claims, wherein said copolymer of at least one ethylenically unsaturated carboxylic acid or a derivative thereof with at least one ethylenically unsaturated monomer containing at least one polyoxyalkylene side chain (d) is selected from compounds having the following general formula (I): 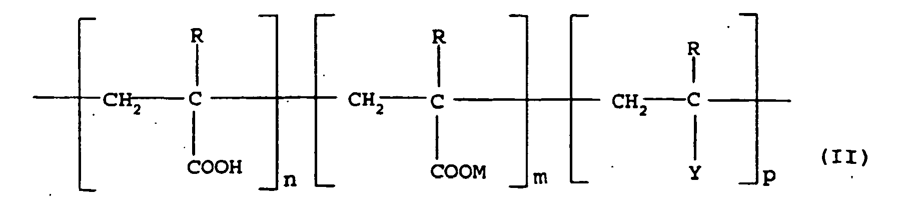 wherein:
- R represents a hydrogen atom or a linear or branched C₁-C₄ alkyl group;
- M represents a monovalent or a divalent cation;
- n is an integer of from 0 to 20, extremes included;
- m and p, which may be equal or different from each other, are an integer of from 1 to 20, extremes included;
- Y represents one of the groups having the following general formulae (III), (IV), or (V): 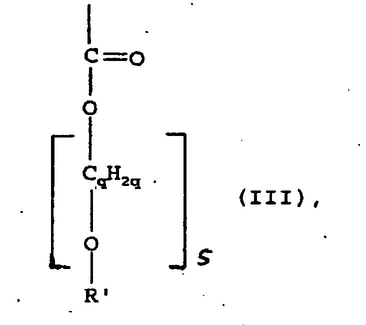 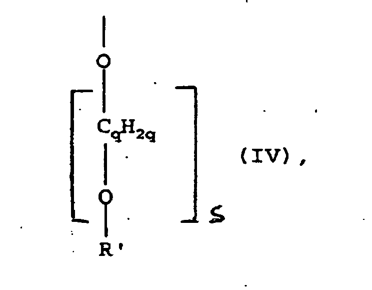 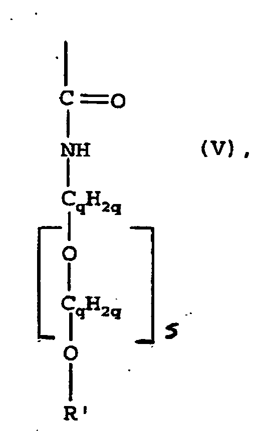
wherein:
- R has the same meanings as above disclosed;
- R' represents a hydrogen atom; a linear or branched C₁-C₁₀ alkyl group; a R"-SO₃M group,
wherein R" represents a linear or branched C₂-C₁₀ alkylene group, and M has the same meanings as above disclosed;
- q is an integer of from 1 to 10, extremes included;
- s is an integer of from 1 to 100, extremes included.

26. Tire according to claim 25, wherein in said compounds having general formula (II) M represents:
- an alkali metal cation;
- an alkaline-earth metal cation;
- an ammonium cation having formula N(R₆)₄ wherein, R₆ groups, which may be equal or different from each other, are selected from: hydrogen atoms, linear or branched C₁-C₁₈ alkyl groups, C₆-C₁₈ aryl groups, C₇-C₂₁ arylalkyl or alkylaryl groups;
- a zinc cation.

27. Tire according to any one of the preceding claims, wherein said copolymer of at least one ethylenically unsaturated carboxylic acid or a derivative thereof with at least one ethylenically unsaturated monomer containing at least one polyoxyalkylene side chain (d) has a weight-average molecular weight (M_{w}) of from 500 to 100,000.

28. Tire according to claim 27, wherein said copolymer of at least one ethylenically unsaturated carboxylic acid or a derivative thereof with at least one ethylenically unsaturated monomer containing at least one polyoxyalkylene side chain (d) has a weight-average molecular weight (M_{w}) of from 1,000 to 50,000.

29. Tire according to claim 28, wherein said copolymer of at least one ethylenically unsaturated carboxylic acid or a derivative thereof with at least one ethylenically unsaturated monomer containing at least one polyoxyalkylene side chain (c) has a weight-average molecular weight (M_{w}) of from 2,000 to 30,000.

30. Tire according to any one of the preceding claims, wherein said crosslinkable elastomeric composition further comprises (e) at least one polyoxyalkylene glycol in an amount of from 0 phr to 10 phr.

31. Tire according to claim 30, wherein said crosslinkable elastomeric composition further comprises (e) at least one polyoxyalkylene glycol in an amount of from 0.5 phr to 5 phr.

32. Tire according to claim 30 or 31, wherein said polyoxyalkylene glycol (e) is selected from polyoxyethylene glycol, polyoxypropylene glycol, or mixtures thereof.

33. Tire according to any one of the preceding claims, wherein said crosslinkable elastomeric composition further comprises (f) at least one silane coupling agent in an amount of from 0 phr to 10 phr.

34. Tire according to claim 33, wherein said crosslinkable elastomeric composition further comprises (f) at least one silane coupling agent in an amount of from 0.5 phr to 5 phr.

35. Tire according to claim 33 or 34, wherein said silane coupling agent (f) is selected from those having at least one hydrolizable silane group which may be identified by the following general formula (VII):
(R₇)₃Si-CₙH₂ₙ-X (VII)
wherein the groups R₇, which may be equal or different from each other, are selected from: alkyl, alkoxy or aryloxy groups, or from halogen atoms, on condition that at least one of the groups R₇ is an alkoxy or aryloxy group; n is an integer of from 1 to 6, extremes included; X is a group selected from: nitroso, mercapto, amino, epoxy, vinyl, imido, chloro, -(S)ₘCₙH2ₙ-Si-(R₇)₃, or -S-COR₇, in which m and n are integers of from 1 to 6, extremes included, and the groups R₇ are defined as above.

## Patentansprüche

1. Reifen, der umfasst:
- eine Karkassenstruktur, die mindestens eine Karkassenlage mit im wesentlichen torusförmiger Form mit gegenüberliegenden Seitenkanten, die mit entsprechenden rechten und linken Wulststrukturen im Zusammenhang stehen, wobei die Wulststrukturen mindestens einen Wulstkern und mindestens einen Wulstfüllestoff umfassen;
- eine Gürtelstruktur die in einer radial äusseren Position in bezug auf die Karkassenstruktur angebracht ist;
- ein Laufflächenband, das radial oberhalb der Gürtelstruktur angebracht ist;
- ein Paar Seitenwände, die seitlich auf gegenüberliegenden Seien in bezug auf die Karkassenstruktur angebracht sind;
- mindestens eine Schicht, die ein vernetztes Elastomermaterial mit Luftbarriereeigenschaften einschliesst;
wobei das vernetzte Elastomermaterial erhalten wird durch Vernetzen einer vernetzbaren Elastomerzusammmensetzung, die umfasst:
(a) eine Menge von 10 bis 100 phr mindestens eines Butylkautschuks;
(b) eine Menge von 0 bis 90 phr mindestens eines elastomeren Dienpolymers;
(c) eine Menge von 5 bis 120 phr mindestens eines Verstärkungsfüllstoffs;
(d) eine Menge von 2 bis 20 phr mindestens eines Copolymers mindestens einer ethylenisch ungesättigten Carbonsäure oder eines Derivats davon mit mindestens einem ethylenisch ungesättigten Monomer, das mindestens eine Polyoxyalkylen-Seitenkette enthält.

2. Reifen gemäss Anspruch 1, in dem die vernetzbare Elastomerzusammensetzung eine Menge von 20 bis 60 phr mindestens eines Butylkautschuks (a) enthält.

3. Reifen gemäss Anspruch 1 oder 2, in dem die vernetzbare Elastomerzusammensetzung eine Menge von 40 bis 80 phr mindestens eines elastomeren Dienpolymers (b) enthält.

4. Reifen gemäss mindestens einem der vorhergehenden Ansprüche, in dem die vernetzbare Elastomerzusammensetzung eine Menge von 15 bis 90 phr mindestens eines Verstärkungsfüllstoffs (c) enthält.

5. Reifen gemäss mindestens einem der vorhergehenden Ansprüche, in dem die vernetzbare Elastomerzusammensetzung eine Menge von 5 bis 15 phr mindestens eines Copolymers (d) mindestens einer ethylenisch ungesättigten Carbonsäure oder eines Derivats davon mit mindestens einem ethylenisch ungesättigten Monomer, das mindestens eine Polyoxyalkylen-Seitenkette enthält, enthält.

6. Reifen gemäss mindestens einem der vorhergehenden Ansprüche, in dem die mindestens eine Schicht, die ein vernetztes Elastomermaterial mit Luftbarriereeigenschaften einschliesst, in einer radial inneren Position in bezug auf die Karkassenstruktur angebracht ist.

7. Reifen gemäss mindestens einem der vorhergehenden Ansprüche, in dem die mindestens eine Schicht, die ein vernetztes Elastomermaterial mit Luftbarriereeigenschaften einschliesst, ein Reifen-Innerliner ist.

8. Reifen gemäss mindestens einem der Ansprüche 1 bis 5, in dem die mindestens eine Schicht, die ein vernetztes Elastomermaterial mit Luftbarriereeigenschaften einschliesst, in die mindestens eine Karkassenlage eingeschlossen ist.

9. Reifen gemäss mindestens einem der vorhergehenden Ansprüche, in dem der Butylkautschuk (a) ausgewählt ist aus der Gruppe, die umfasst:
- Isobutylkautschuke;
- halogenierte Butylkautschuke;
- verzweigte oder "sternverzweigte" Butylkautschuke (SBB), halogenierte "sternverzweigte" Butylkautschuke (HSSB) oder Mischungen davon;
- halogenierte Isobutylen/p-Alkylstyrol-Copolymere.

10. Reifen gemäss Anspruch 9, in dem die Isobutylkautschuke ausgewählt sind aus Homopolymeren von Isoolefinmonomer, das 4 bis 12 Kohlenstoffatome enthält, oder Copolymeren, die erhalten werden durch Polymerisieren einer Mischung, die mindestens ein Isoolefinmonomer, das 4 bis 12 Kohlenstoffatome enthält, und mindestens ein konjugiertes Diolefinmonomer, das 4 bis 12 Kohlenstoffatome enthält, umfasst.

11. Reifen gemäss Anspruch 9, in dem die halogenierten Butylkautschuke Chlorbutylkautschuk, Brombutylkautschuk oder Mischungen davon sind.

12. Reifen gemäss mindestens einem der vorhergehenden Ansprüche, in dem das elastomere Dienpolymer (b) eine Glasübergangstemperatur unter 20°C hat.

13. Reifen gemäss Anspruch 12, in dem das elastomere Dienpolymer (b) ausgewählt ist aus cis-1,4-Polyisopren, 3,4-Polyisopren, Polybutadien, gegebenenfalls halogenierten Isopren/Isobuten-Copolymeren, 1,3-Butadien/Acrylnitril-Copolymeren, Styrol/1,3-Butadien-Copolymeren, Styrol/Isopren/1,3-Butadien-Copolymeren, Styrol/1,3-Butadien/Acrylnitril-Copolymeren oder Mischungen davon.

14. Reifen gemäss mindestens einem der vorhergehenden Ansprüche, in dem die vernetzbare Elastomerzusammensetzung ferner (b') mindestens ein elastomeres Copolymer von Ethylen und mindestens einem α-Olefin optional mit einem Dien, umfasst.

15. Reifen gemäss Anspruch 14, in dem das elastomere Copolymer (b') ausgewählt ist aus Ethylen/Propylen-Copolymeren (EPR) oder Ethylen/Propylen/Dien-Copolymeren (EPDM); oder Mischungen davon.

16. Reifen gemäss mindestens einem der vorhergehenden Ansprüche, in dem der Verstärkungsfüllstoff (c) ausgewählt ist aus Calciumcarbonat, Magnesiumcarbonat, Titanoxid, Silica, Glimmer, Zinkweiss, Ton, Alumina, Aluminosilicaten, Kaolin, Russ oder Mischungen davon.

17. Reifen gemäss Anspruch 16, in dem der Verstärkungsfüllstoff (c) ausgewählt ist aus Calciumcarbonat, Russ oder Mischungen davon.

18. Reifen gemäss mindestens einem der vorhergehenden Ansprüche, in dem der Verstärkungsfüllstoff (c) ausgewählt ist aus Schichtmaterialien mit einer Einzelschichtdicke von 0,01 bis 30 nm.

19. Reifen gemäss Anspruch 18, in dem die Schichtmaterialien eine Einzelschichtdicke von 0,05 bis 15 nm haben.

20. Reifen gemäss Anspruch 19, in dem die Schichtmaterialien eine Einzelschichtdicke von 0,1 bis 2 nm haben.

21. Reifen gemäss mindestens einem der Ansprüche 18 bis 20, in dem die Schichtmaterialien ausgewählt sind aus Phyllosilicaten, wie beispielsweise Smektiten, wie Montmorillonit, Bentonit, Nontronit, Beidellit, Volkonskoit, Hectorit, Saponit, Sauconit; Vermiculit; Halloisit; Sericit; Aluminatoxiden; Hydrotalcit oder Mischungen davon.

22. Reifen gemäss Anspruch 21, in dem die Schichtmaterialien aus Montmorillonit, Bentonit oder Mischungen davon ausgewählt sind.

23. Reifen gemäss mindestens einem der Ansprüche 18 bis 22, in dem die Schichtmaterialien mit mindestens einem Kompatibilisierungsmittel behandelt sind.

24. Reifen gemäss Anspruch 23, in dem das Kompatibilisierungsmittel ausgewählt ist aus quaternären Ammonium- oder Phosphoniumsalzen der allgemeinen Formel (I): 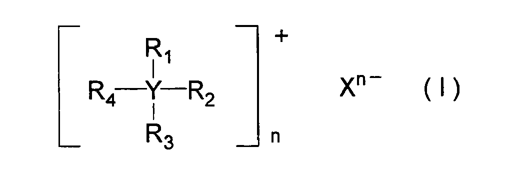 worin:
- Y N oder P bezeichnet;
- R₁, R₂, R₃ und R₄, die gleich oder verschieden voneinander sein können, eine lineare oder verzweigte C₁₋₂₀-Alkyl- oder Hydroxyalkylgruppe; eine lineare oder verzweigte C₁₋₂₀-Alkenyl- oder Hydroxyalkenylgruppe; eine Gruppe -R₅-SH oder -R₅-NH, worin R₅ eine lineare oder verzweigte C₁₋₂₀-Alkylengruppe bezeichnet; eine C₆₋₁₈-Arylgruppe; eine C₇₋₂₀-Arylalkyl- oder Alkylarylgruppe; eine C₅₋₁₈-Cycloalkylgruppe, wobei die Cycloalkylgruppe gegebenenfalls Heteroatom(e), wie Sauerstoff, Stickstoff oder Schwefel, enthalten kann, bezeichnen;
- Xⁿ⁻ ein Anion, wie beispielsweise das Chloridion, das Sulfation oder das Phosphation, bezeichnet;
- n 1, 2 oder 3 bezeichnet.

25. Reifen gemäss mindestens einem der vorhergehenden Ansprüche, in dem das Copolymer (d) mindestens einer ethylenisch ungesättigten Carbonsäure oder eines Derivats davon mit mindestens einem ethylenisch ungesättigten Monomer, das mindestens eine Polyoxyalkylen-Seitenkette enthält, ausgewählt ist aus Verbindungen mit der folgenden allgemeinen Formel (I): 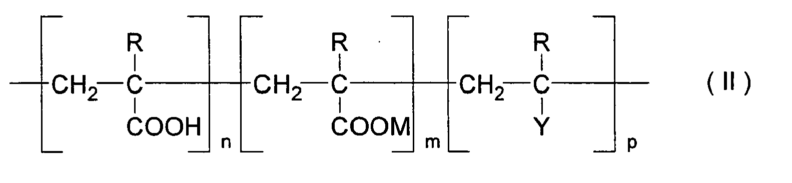 worin
- R ein Wasserstoffatom oder eine lineare oder verzweigte C₁₋₄-Alkylgruppe bezeichnet;
- M ein einwertiges oder ein zweiwertiges Kation bezeichnet;
- n eine ganze Zahl von 0 bis 20 ist, wobei die Grenzen eingeschlossen sind,
- m und p, die gleich oder verschieden voneinander sein können, eine ganze Zahl von 1 bis 20, Grenzen eingeschlossen, sind;
- Y eine der Gruppen mit den folgenden allgemeinen Formeln (III), (IV) oder (V) bezeichnet: 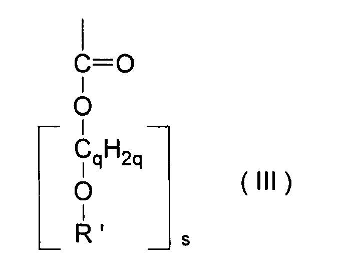 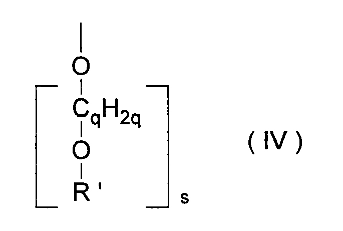 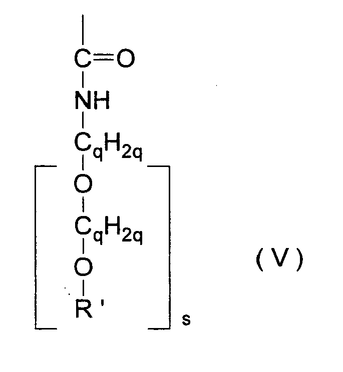
worin:
- R dieselben Bedeutungen hat, wie oben angegeben;
- R' ein Wasserstoffatom; eine lineare oder verzweigte C₁₋₁₀-Alkylgruppe; eine R"-SO₃M-Gruppe, worin R" eine lineare oder verzweigte C₂₋₁₀-Alkylengruppe bedeutet, und M dieselben Bedeutungen hat, wie oben angegeben, bezeichnet;
- q eine ganze Zahl von 1 bis 10 bezeichnet, wobei die Grenzen eingeschlossen sind;
- s eine ganze Zahl von 1 bis 100 ist, wobei die Grenzen eingeschlossen sind.

26. Reifen gemäss Anspruch 25, in dem in den Verbindungen mit der allgemeinen Formel (II) M bezeichnet:
- ein Alkalimetallkation;
- ein Erdalkalimetallkation;
- ein Ammoniumkation mit der Formel N(R₆)₄, in der die Gruppen R₆, die gleich oder verschieden voneinander sein können, ausgewählt sind aus Wasserstoffatomen, linearen oder verzweigten C₁₋₁₈-Alkylgruppen, C₆₋₁₈-Arylgruppen, C₇₋₂₁-Arylalkyl- oder Alkylarylgruppen;
- ein Zinkkation.

27. Reifen gemäss mindestens einem der vorhergehenden Ansprüche, in dem das Copolymer (d) mindestens einer ethylenisch ungesättigten Carbonsäure oder eines Derivats davon mit mindestens einem ethylenisch ungesättigten Monomer, das mindestens eine Polyoxyalkylen-Seitenkette enthält, ein gewichtsgemitteltes Molekulargewicht (Mw) von 500 bis 100.000 hat.

28. Reifen gemäss Anspruch 27, in dem das Copolymer (d) mindestens einer ethylenisch ungesättigten Carbonsäure oder eines Derivats davon mit mindestens einem ethylenisch ungesättigten Monomer, das mindestens eine Polyoxyalkylen-Seitenkette enthält, ein gewichtsgemitteltes Molekulargewicht (Mw) von 1.000 bis 50.000 hat.

29. Reifen gemäss Anspruch 28, in dem das Copolymer (d) mindestens einer ethylenisch ungesättigten Carbonsäure oder eines Derivats davon mit mindestens einem ethylenisch ungesättigten Monomer, das mindestens eine Polyoxyalkylen-Seitenkette enthält, ein gewichtsgemitteltes Molekulargewicht (Mw) von 2.000 bis 30.000 hat.

30. Reifen gemäss mindestens einem der vorhergehenden Ansprüche, in dem die vernetzbare Elastomerzusammensetzung ferner (e) mindestens ein Polyoxyalkylenglykol in einer Menge von 0 bis 10 phr enthält.

31. Reifen gemäss Anspruch 30, in dem die vernetzbare Elastomerzusammensetzung ferner (e) mindestens ein Polyoxyalkylenglykol in einer Menge von 0,5 bis 5 phr enthält.

32. Reifen gemäss Anspruch 30 oder 31, in dem das Polyoxyalkylenglykol (e) aus Polyoxyethylenglykol, Polyoxypropylenglykol oder Mischungen davon ausgewählt ist.

33. Reifen gemäss mindestens einem der vorhergehenden Ansprüche, in dem die vernetzbare Elastomerzusammensetzung ferner (f) mindestens einen Silan-Haftvermittler in einer Menge von 0 bis 10 phr enthält.

34. Reifen gemäss Anspruch 33, in dem die vernetzbare Elastomerzusammensetzung ferner (f) mindestens einen Silan-Haftvermittler in einer Menge von 0,5 bis 5 phr enthält.

35. Reifen gemäss Anspruch 33 oder 34, in dem der Silan-Haftvermittler (f) aus denjenigen mit mindestens einer hydrolysierbaren Silangruppe ausgewählt ist, die durch die folgende allgemeine Formel (VII) bezeichnet werden können:
(R₇)₃Si-CₙH₂ₙ-X (VII)
worin die Gruppen R₇, die gleich oder verschieden voneinander sein können, ausgewählt sind aus Alkyl-, Alkoxy- oder Aryloxygruppen oder aus Halogenatomen, unter der Bedingung, dass mindestens eine der Gruppen R₇ eine Alkoxy- oder Aryloxygruppe ist; n eine ganze Zahl von 1 bis 6 ist, wobei die Grenzen eingeschlossen sind; X eine Gruppe ist, ausgewählt aus Nitroso, Mercapto, Amino, Epoxy, Vinyl, Imido, Chloro, -(S)ₘCₙH₂ₙ-Si-(R₇)₃ oder -S-COR₇, in denen m und n ganze Zahlen von 1 bis 6 sind, die Grenzen eingeschlossen, und die Gruppen R₇ wie oben definiert sind.

## Revendications

1. Pneumatique comprenant :
- une structure de carcasse comprenant au moins une nappe de carcasse, de forme sensiblement toroïdale, dont les bords opposés sont respectivement associés à des structures de talon droit et de talon gauche, lesquelles structures de talon comprennent chacune au moins une tringle et au moins un bourrage ;
- une structure de ceinture, placée en situation radialement externe par rapport à ladite structure de carcasse ;
- une bande de roulement, placée radialement par-dessus ladite structure de ceinture ;
- une paire de flancs, placés latéralement sur les bords opposés de ladite structure de carcasse ;
- et au moins une couche contenant un matériau élastomère réticulé, doté de la capacité de faire barrière à l'air ;
pour lequel ledit matériau élastomère réticulé a été obtenu par réticulation d'une composition élastomère réticulable qui comprenait :
a) au moins un caoutchouc butyl, en une proportion de 10 à 100 ppcc (parties en poids pour cent parties de caoutchouc) ;
b) au moins un élastomère de type polymère de diène, en une proportion de 0 à 90 ppcc ;
c) au moins une charge renforçante, en une proportion de 5 à 120 ppcc ;
d) et au moins un copolymère d'au moins un acide carboxylique à insaturation éthylénique ou dérivé d'un tel acide et d'au moins un monomère à insaturation éthylénique comportant au moins une chaîne latérale de type polyoxyalkylène, en une proportion de 2 à 20 ppcc.

2. Pneumatique conforme à la revendication 1, pour lequel ladite composition élastomère réticulable comprenait de 20 à 60 ppcc d'au moins un caoutchouc butyl (a).

3. Pneumatique conforme à la revendication 1 ou 2, pour lequel ladite composition élastomère réticulable comprenait de 40 à 80 ppcc d'au moins un élastomère de type polymère de diène (b).

4. Pneumatique conforme à l'une des revendications précédentes, pour lequel ladite composition élastomère réticulable comprenait de 15 à 90 ppcc d'au moins une charge renforçante (c).

5. Pneumatique conforme à l'une des revendications précédentes, pour lequel ladite composition élastomère réticulable comprenait de 5 à 15 ppcc d'au moins un copolymère (d) d'au moins un acide carboxylique à insaturation éthylénique ou dérivé d'un tel acide et d'au moins un monomère à insaturation éthylénique comportant au moins une chaîne latérale de type polyoxyalkylène.

6. Pneumatique conforme à l'une des revendications précédentes, dans lequel ladite couche, au nombre d'au moins une, contenant un matériau élastomère réticulé, doté de la capacité de faire barrière à l'air, est placée en situation radialement interne par rapport à ladite structure de carcasse.

7. Pneumatique conforme à l'une des revendications précédentes, dans lequel ladite couche, au nombre d'au moins une, contenant un matériau élastomère réticulé, doté de la capacité de faire barrière à l'air, est un calandrage intérieur de pneumatique.

8. Pneumatique conforme à l'une des revendications 1 à 5, dans lequel ladite couche, au nombre d'au moins une, contenant un matériau élastomère réticulé, doté de la capacité de faire barrière à l'air, est incluse dans ladite nappe de carcasse au nombre d'au moins une.

9. Pneumatique conforme à l'une des revendications précédentes, pour lequel ledit caoutchouc butyl (a) est choisi parmi :
- les caoutchoucs isobutyl ;
- les caoutchoucs butyl halogénés ;
- les caoutchoucs butyl ramifiés ou "ramifiés en étoile" (SBB), les caoutchoucs butyl "ramifiés en étoile" halogénés (HSBB), et leurs mélanges ;
- et les copolymères d'isobutène et de p-alkyl-styrène halogénés.

10. Pneumatique conforme à la revendication 9, pour lequel lesdits caoutchoucs isobutyl sont choisis parmi les homopolymères de monomères de type iso-oléfine comportant de 4 à 12 atomes de carbone, et les copolymères obtenus par polymérisation d'un mélange comprenant au moins un monomère de type iso-oléfine comportant de 4 à 12 atomes de carbone et au moins un monomère de type diène conjugué comportant de 4 à 12 atomes de carbone.

11. Pneumatique conforme à la revendication 9, pour lequel lesdits caoutchoucs butyl halogénés sont les caoutchoucs chlorobutyl et les caoutchoucs bromobutyl, ainsi que leurs mélanges.

12. Pneumatique conforme à l'une des revendications précédentes, dans lequel ledit élastomère (b) de type polymère de diène présentait une température de transition vitreuse inférieure à 20 °C.

13. Pneumatique conforme à la revendication 12, pour lequel ledit élastomère (b) de type polymère de diène a été choisi parmi les suivants : cis-1,4-polyisoprène, 3,4-polyisoprène, polybutadiène, copolymères d'isoprène et d'isobutène, éventuellement halogénés, copolymères de buta-1,3-diène et d'acrylonitrile, copolymères de buta-1,3-diène et de styrène, copolymères de buta-1,3-diène, d'isoprène et de styrène, et copolymères de buta-1,3-diène, d'acrylonitrile et de styrène, ainsi que les mélanges de tels polymères.

14. Pneumatique conforme à l'une des revendications précédentes, pour lequel ladite composition élastomère réticulable contenait en outre au moins un copolymère élastomère (b') obtenu à partir d'éthylène et d'au moins une α-oléfine, et en option, d'un diène.

15. Pneumatique conforme à la revendication 14, pour lequel ledit copolymère élastomère (b') a été choisi parmi les copolymères d'éthylène et de propylène (EPR) et les copolymères d'éthylène, de propylène et de diène (EPDM), ainsi que leurs mélanges.

16. Pneumatique conforme à l'une des revendications précédentes, pour lequel ladite charge renforçante (c) a été choisie parmi les suivantes : carbonate de calcium, carbonate de magnésium, oxyde de titane, silice, mica, blanc de zinc, argiles, alumine, alumino-silicates, kaolin et noir de carbone, ainsi que leurs mélanges.

17. Pneumatique conforme à la revendication 16, pour lequel ladite charge renforçante (c) a été choisie parmi du carbonate de calcium, du noir de carbone et leurs mélanges.

18. Pneumatique conforme à l'une des revendications précédentes, pour lequel ladite charge renforçante (c) a été choisie parmi les matériaux feuilletés dont les feuillets sont individuellement épais de 0,01 à 30 nm.

19. Pneumatique conforme à la revendication 18, dans lequel les feuillets du matériau feuilleté sont individuellement épais de 0,05 à 15 nm.

20. Pneumatique conforme à la revendication 19, dans lequel les feuillets du matériau feuilleté sont individuellement épais de 0,1 à 2 nm.

21. Pneumatique conforme à l'une des revendications 18 à 20, pour lequel lesdits matériaux feuilletés sont choisis parmi les phyllosilicates, tels que les smectites comme les montmorillonite, bentonite, nontronite, beidellite, volkonskoïte, hectorite, saponite et sauconite, la vermiculite, l'halloysite, la séricite, les oxydes de type aluminate, et l'hydrotalcite, ainsi que leurs mélanges.

22. Pneumatique conforme à la revendication 21, pour lequel lesdits matériaux feuilletés sont choisis parmi de la montmorillonite et de la bentonite, ainsi que leurs mélanges.

23. Pneumatique conforme à l'une des revendications 18 à 22, dans lequel lesdits matériaux feuilletés ont été traités avec au moins un agent de compatibilisation.

24. Pneumatique conforme à la revendication 23, pour lequel ledit agent de compatibilisation a été choisi parmi les sels d'ammonium quaternaire ou de phosphonium quaternaire de formule générale (I) : 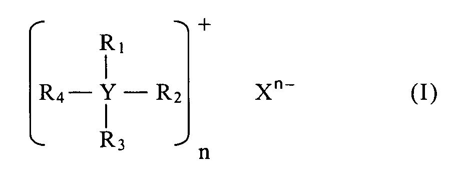 dans laquelle :
- Y représente un atome d'azote ou de phosphore ;
- R₁, R₂, R₃ et R₄ représentent des entités qui peuvent être identiques
ou différentes les unes des autres et qui sont des groupes alkyle ou hydroxyalkyle en C₁₋₂₀, à chaîne linéaire ou ramifiée, des groupes alcényle ou hydroxyalcényle en C₁₋₂₀, à chaîne linéaire ou ramifiée, des groupes de formule -R₅-SH ou -R₅-NH₂ où R₅ représente un groupe alcanediyle en C₁₋₂₀, à chaîne linéaire ou ramifiée, des groupes aryle en C₆₋₁₈, des groupes aryl-alkyle ou alkyl-aryle en C₇₋₂₀, ou des groupes cycloalkyle en C₅₋₁₈, lesquels groupes cycloalkyle peuvent comporter un hétéroatome comme un atome d'oxygène, d'azote ou de soufre ;
- Xⁿ⁻ représente un anion, comme l'ion chlorure, l'ion sulfate ou l'ion phosphate ;
- et n représente le nombre 1, 2 ou 3.

25. Pneumatique conforme à l'une des revendications précédentes, pour lequel ledit copolymère (d) d'au moins un acide carboxylique à insaturation éthylénique ou dérivé d'un tel acide et d'au moins un monomère à insaturation éthylénique comportant au moins une chaîne latérale de type polyoxyalkylène a été choisi parmi les composés de formule générale (II) suivante : 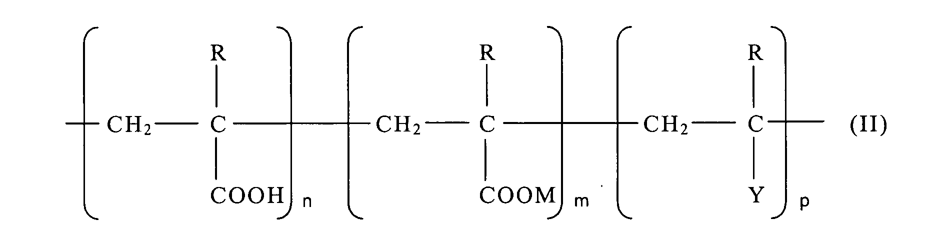 dans laquelle :
- R représente un atome d'hydrogène ou un groupe alkyle en C₁₋₄, linéaire
ou ramifié ;
- M représente un cation monovalent ou divalent ;
- l'indice n est un nombre entier qui vaut de 0 à 20, bornes incluses;
- les indices m et p représentent des nombres entiers qui peuvent être égaux ou différents l'un de l'autre et qui valent de 1 à 20, bornes incluses ;
- et Y représente un groupe correspondant à l'une des formules générales (III), (IV) et (V) suivantes : 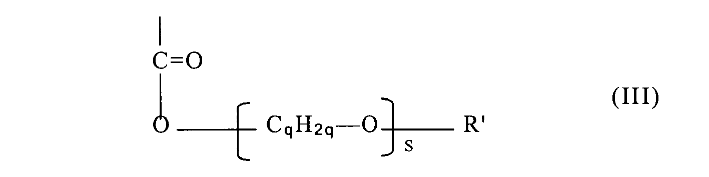 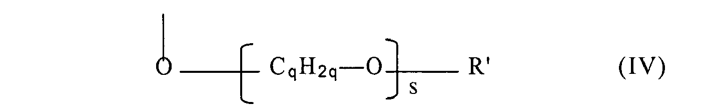 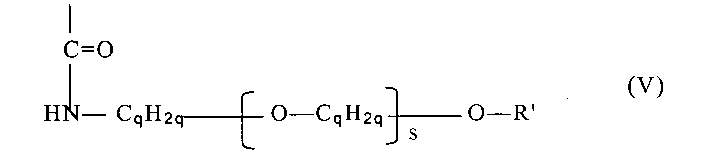
dans lesquelles
- R a la même signification que celle indiquée ci-dessus ;
- R' représente un atome d'hydrogène, un groupe alkyle en C₁₋₁₀, linéaire
ou ramifié, ou un groupe de formule R"-SO₃M où R" représente un groupe alcanediyle en C₂₋₁₀, linéaire ou ramifié, et M a la même signification que celle indiquée ci-dessus ;
- l'indice q est un nombre entier qui vaut de 1 à 10, bornes incluses ;
- et l'indice s est un nombre entier qui vaut de 1 à 100, bornes incluses.

26. Pneumatique conforme à la revendication 25, dans lequel, dans lesdits composés de formule générale (II), M représente :
- un cation de métal alcalin,
- un cation de métal alcalino-terreux,
- un cation de type ammonium, de formule N(R₆)₄ où les symboles R₆ représentent des entités qui peuvent être identiques ou différentes les unes des autres et qui sont choisies parmi des atomes d'hydrogène, les groupes alkyle en C₁₋₁₈, linéaires ou ramifiés, les groupes aryle en C₆₋₁₈, et les groupes aryl-alkyle ou alkyl-aryle en C₇₋₂₁,
- ou un cation de zinc.

27. Pneumatique conforme à l'une des revendications précédentes, dans lequel ledit copolymère (d) d'au moins un acide carboxylique à insaturation éthylénique ou dérivé d'un tel acide et d'au moins un monomère à insaturation éthylénique comportant au moins une chaîne latérale de type polyoxyalkylène présente une masse molaire moyenne en poids Mw valant de 500 à 100 000.

28. Pneumatique conforme à la revendication 27, dans lequel ledit copolymère (d) d'au moins un acide carboxylique à insaturation éthylénique ou dérivé d'un tel acide et d'au moins un monomère à insaturation éthylénique comportant au moins une chaîne latérale de type polyoxyalkylène présente une masse molaire moyenne en poids Mw valant de 1000 à 50 000.

29. Pneumatique conforme à la revendication 28, dans lequel ledit copolymère (d) d'au moins un acide carboxylique à insaturation éthylénique ou dérivé d'un tel acide et d'au moins un monomère à insaturation éthylénique comportant au moins une chaîne latérale de type polyoxyalkylène présente une masse molaire moyenne en poids Mw valant de 2000 à 30 000.

30. Pneumatique conforme à l'une des revendications précédentes, pour lequel ladite composition élastomère réticulable peut en outre comprendre au moins un poly(oxyalkylène)glycol (composant e), en une proportion de 0 à 10 ppcc.

31. Pneumatique conforme à la revendication 30, pour lequel ladite composition élastomère réticulable comprend en outre au moins un poly-(oxyalkylène)glycol (composant e), en une proportion de 0,5 à 5 ppcc.

32. Pneumatique conforme à la revendication 30 ou 31, dans lequel ledit poly(oxyalkylène)glycol (e) est choisi parmi un poly(oxyéthylène)glycol, un poly(oxypropylène)glycol, et les mélanges de tels composés.

33. Pneumatique conforme à l'une des revendications précédentes, pour lequel ladite composition élastomère réticulable peut en outre comprendre au moins un agent de couplage de type silane (composant f), en une proportion de 0 à 10 ppcc.

34. Pneumatique conforme à la revendication 33, pour lequel ladite composition élastomère réticulable comprend en outre au moins un agent de couplage de type silane (composant f), en une proportion de 0,5 à 5 ppcc.

35. Pneumatique conforme à la revendication 33 ou 34, pour lequel ledit agent de couplage de type silane a été choisi parmi ceux qui comportent au moins un groupe silyle hydrolysable et qui peuvent être représentés par la formule générale (VII) suivante :
(R₇)₃Si-CₙH₂ₙ-X (VII)
dans laquelle
- les symboles R₇ représentent des entités qui peuvent être identiques
ou différentes les unes des autres et qui sont choisies parmi les groupes alkyle, alcoxy et aryloxy et les atomes d'halogène, sous réserve qu'au moins l'une des entités représentées par R₇ soit un groupe alcoxy ou aryloxy ;
- l'indice n est un nombre entier qui vaut de 1 à 6, bornes incluses ;
- et X représente une entité choisie parmi les groupes nitroso, sulfanyle, amino et vinyle, les groupes de type époxyde ou imide, un atome de chlore, et les groupes de formule -(S)ₘ-CₙH₂ₙ-Si(R₇)₃ ou - S-CO-R₇ où les indices m et n sont des nombres entiers qui valent de 1 à 6, bornes incluses, et R₇ a la signification indiquée ci-dessus.
